# EUROPEAN PATENT APPLICATION

(11) **EP 4 756 941 A1**
(43) Date of publication of application: **10.06.2026**
(21) Application number: 25829253.1
(22) Date of filing: 23.01.2025
(51) Int. Cl.: H01M 8/04828, H01M 8/04492

(54) **FUEL CELL CONTROL SYSTEM, FUEL CELL CONTROL METHOD, AND ELECTROCHEMICAL DETECTION APPARATUS**

(30) Priority: 19.06.2024 US 202463661883 P
(71) Applicant: Delta Electronics, Inc., Taoyuan City 333 (TW)
(72) Inventor: PENG, Yung-wei, Taoyuan City Taiwan 333 (TW); HSU, Che-jung, Taoyuan City Taiwan 333 (TW); WEN, Wei-hsin, Taoyuan City Taiwan 333 (TW); LIN, Chang-chung, Taoyuan City Taiwan 333 (TW); WANG, Chien-jen, Taoyuan City Taiwan 333 (TW)
(74) Representative: Porta & Consulenti Associati S.p.A.
(86) International application number: PCT/CN2025/074367
(87) International publication number: WO 2025/260760

(57) **Abstract**

A fuel cell control system, which includes an electrochemical detection apparatus, a control apparatus and a power converter, and is used for coupling a fuel cell to supply power to a load. The electrochemical detection apparatus includes a sensing apparatus and a processor. The sensing apparatus is used for sensing a cell current and a cell voltage. The processor is used for executing electrochemical analysis on the basis of the cell voltage and the cell current, and determining a water content state of the fuel cell. The control apparatus is used for adjusting a fuel state of the fuel cell when the water content state is a dry film state or a water-saturated state. The power converter is used for determining a loading condition of the fuel cell, and generating output power on the basis of the cell voltage and the cell current when the water content state is in a normal state, wherein the cell voltage and the cell current are related to the loading condition. The present disclosure further relates to a fuel cell control method and an electrochemical detection apparatus.

## Description

### BACKGROUND

### Technical Field

The present disclosure relates to a technology of controlling parameters of fuel cell systems. More particularly, the present disclosure relates to a fuel cell control system, a fuel cell control method and an electrochemical detection device that can detect the water content condition of a fuel cell and adjust related parameters.

### Description of Related Art

In current fuel cell technology, fuel cells generate current by using fuel (i.e., reactant gas). Therefore, most fuel cell systems currently on the market control the current by adjusting the amount of fuel. The performance of a fuel cell is related to its water content condition. When the water content condition of a fuel cell is out of balance, the output power of the fuel cell will be reduced and the life of the fuel cell will be shortened. In order for a fuel cell to operate normally, the fuel cell controls the fuel to maintain the water content condition of the membrane electrode assembly (membrane material) at a normal state.

Fuel cells currently on the market typically use a voltage detector to monitor the voltage of each fuel cell, thereby determining whether the water content condition of the fuel cell is out of balance. However, this method cannot accurately determine the water content condition of the fuel cell, thereby affecting the efficiency of fuel adjustment. Therefore, how to efficiently and instantly adjust the fuel based on the water content condition of the fuel cell is one of the topics in this field.

### SUMMARY

A fuel cell control system is provided in the present disclosure. The fuel cell control system is configured to be coupled to a fuel cell to provide power to a load, and comprises an electrochemical detection device, a control device and a power converter. The electrochemical detection device is coupled to the fuel cell, and comprises a detection device and a processor. The detection device is configured to detect a cell voltage and a cell current of the fuel cell. The processor is coupled to the detection device, and is configured to perform an electrochemical analysis based on the cell voltage and the cell current to determine a water content condition of the fuel cell. The control device is coupled to the fuel cell and the electrochemical detection device, and is configured to adjust a fuel condition of the fuel cell when the water content condition of the fuel cell is in a dry state or a flooding state. The power converter is configured to determine a loading condition of the fuel cell, and generate an output power based on the cell voltage and the cell current when the water content condition of the fuel cell is in a normal state, wherein the cell voltage and the cell current is related to the loading condition.

A fuel cell control method is provided in the present disclosure. The fuel cell control method is suitable for a fuel cell control system, and comprises: determining, by a power converter, a loading condition of a fuel cell; generating, by the fuel cell, a cell voltage and a cell current, based on the loading condition and a fuel condition of the fuel cell; detecting, by a detection device, the cell voltage and the cell current; performing, by a processor, an electrochemical analysis based on the cell voltage and the cell current, so as to determine a water content condition of the fuel cell; in response to the water content condition of the fuel cell being in a dry state or a flooding state, adjusting, by a control device, the fuel condition of the fuel cell; and in response to the water content condition of the fuel cell being in a normal state, generating, by the power converter, an output power.

An electrochemical detection device is provided in the present disclosure. The electrochemical detection device is coupled to a fuel cell, and comprises a detection device and a processor. The detection device is configured to detect a cell voltage and a cell current generated based on a fuel condition by the fuel cell. The processor is coupled to the detection device, and is configured to perform an electrochemical analysis based on the cell voltage and the cell current, and is configured to determine a water content condition of the fuel cell is in a normal state, a dry state or a flooding state based on the electrochemical analysis.

With the fuel cell control system, the fuel cell control method and the electrochemical detection device of the present disclosure, it is possible to determine whether the water content condition of the fuel cell is normal by using electrochemical analysis, and adjust the fuel condition of the fuel cell based on the analysis results, thereby effectively avoiding the imbalance of the water content condition of the fuel cell.

### BRIEF DESCRIPTION OF THE DRAWINGS

The present disclosure can be more fully understood by reading the following detailed description of the embodiment, with reference made to the accompanying drawings as follows.
Fig. 1 is a schematic diagram of the changes in cell voltage of a fuel cell over time in accordance with some instances.
Fig. 2 is a functional block diagram of a fuel cell control system in accordance with some embodiments of the present disclosure.
Fig. 3 is a functional block diagram of a fuel cell in accordance with the embodiment of Fig. 2.
Fig. 4 is an electrochemical impedance spectroscopy of a fuel cell in accordance with some embodiments of the present disclosure.
Fig. 5 is a high frequency resistance spectrum of a fuel cell in accordance with some embodiments of the present disclosure.
Fig. 6A is a flowchart of a fuel cell control method in accordance with some embodiments of the present disclosure.
Fig. 6B is a flowchart of some steps of the fuel cell control method in accordance with some embodiments of the present disclosure.
Fig. 6C is a flowchart of some steps of the fuel cell control method in accordance with some embodiments of the present disclosure.
Fig. 6D is a flowchart of some steps of the fuel cell control method in accordance with some embodiments of the present disclosure.

### Description of the reference labels in drawings:

100: fuel cell control system;
110: fuel cell;
110_EIS: electrochemical impedance spectroscopy (EIS);
110_HFR: high frequency resistance (HFR) spectrum;
111: fuel cell stack;
112: temperature control subsystem;
113: air regulation subsystem;
114: hydrogen regulation subsystem;
120: electrochemical detection device;
121: detection device;
122: processor;
130: control device;
140: power converter;
150: system loading;
600: fuel cell control method;
S610, S620, S630, S640: step;
S650, S660, S670, S680: step;
S690: step;
S690A, S690D, S690F: step;
S690D1-S690D8: step;
S690F1-S690F8: step;
AD: adjustment instruction;
ANA: analysis result;
I_{FC}: cell current;
V_{FC}: cell voltage;
Z': real part;
Z": imaginary part.

### DETAILED DESCRIPTION

Reference will now be made in detail to the present embodiments of the disclosure, examples of which are illustrated in the accompanying drawings. Wherever possible, the same reference numbers are used in the drawings and the description to refer to the same or like parts.

As used in the present disclosure, the singular forms "a", "one" and "the" are also intended to include plural forms, unless the context clearly indicates otherwise. It will be further understood that when used in this specification, the terms "comprises (comprising)" and/or "includes (including)" designate the existence of stated features, regions, integers, steps, operations, elements and/or components, but the existence or addition of one or more other features, regions, integers, steps, operations, elements, components, and/or groups thereof are not excluded.

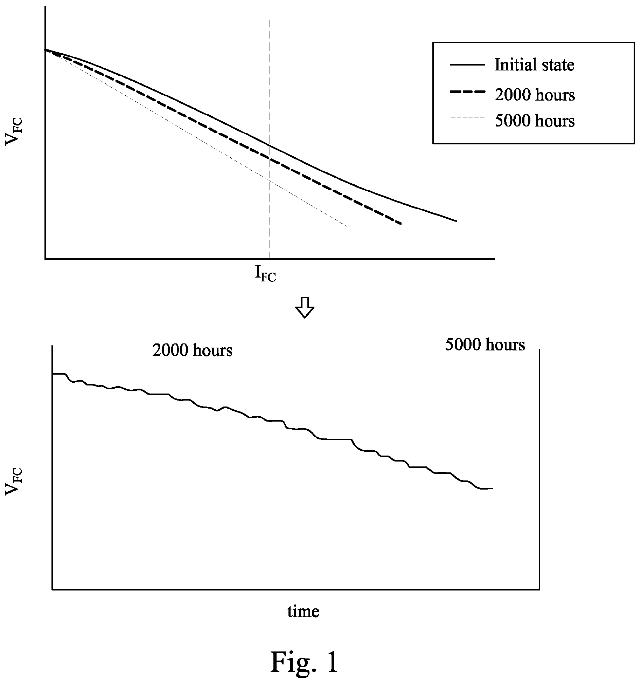

Fig. 1 is a schematic diagram of the changes in cell voltage V_{FC} of a fuel cell over time in accordance with some instances. As shown in the upper half of Fig. 1, as the usage time of a fuel cell increases, the relationship between the cell voltage V_{FC} and the cell current I_{FC} of the fuel cell will change. Specifically, as shown in the lower half of Fig. 1, under the condition of the same cell current I_{FC} (e.g., the cell current I_{FC} corresponding to the vertical line in the upper half of Fig. 1), the cell voltage V_{FC} of the fuel cell decreases as the usage time increases, thereby causing the fuel cell's ability to generate power to decay.

This undesirable degradation occurs over time in fuel cells, but the rate of degradation can be slowed by good management of the water content condition. In order to effectively manage the water content condition of a fuel cell, the present disclosure provides a fuel cell control system.

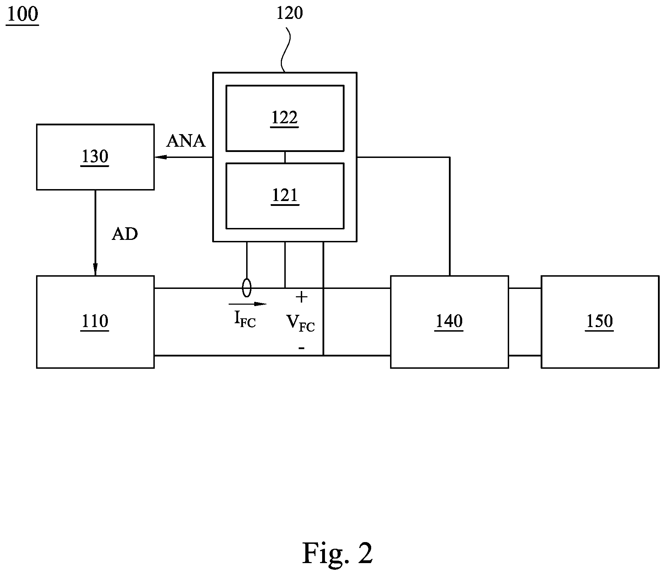

Fig. 2 is a functional block diagram of a fuel cell control system 100 in accordance with some embodiments of the present disclosure. In some embodiments, the fuel cell control system 100 comprises an electrochemical detection device 120, a control device 130 and a power converter 140, and is configured to provide power to a system loading 150 based on the fuel cell 110.

The fuel cell 110 is coupled to the electrochemical detection device 120, the control device 130 and the power converter 140, and is configured to generate the cell voltage V_{FC} and the cell current I_{FC} based on a loading condition set by the power converter 140 and a fuel condition of the fuel cell 110. In some embodiments, the fuel condition of the fuel cell 110 comprises a temperature condition, an air supply condition and a hydrogen supply condition of the fuel cell 110. With different temperature conditions, air supply conditions and hydrogen supply conditions, the fuel cell 110 may have different water contents and thus be in different water content conditions.

Specifically, when the water content of the membrane electrode assembly in the fuel cell 110 is lower than an ideal value, the water content condition of the fuel cell 110 is referred to as being in a "dry" state; when the water content of the membrane electrode assembly in the fuel cell 110 is higher than this ideal value, the water content condition of the fuel cell 110 is referred to as being in a "flooding" state; and when the water content of the membrane electrode assembly in the fuel cell 110 is equal to this ideal value, the water content condition of the fuel cell 110 is referred to as being in a "normal" state. The method for determining the water content of the fuel cell 110 will be described in detail in the following paragraphs.

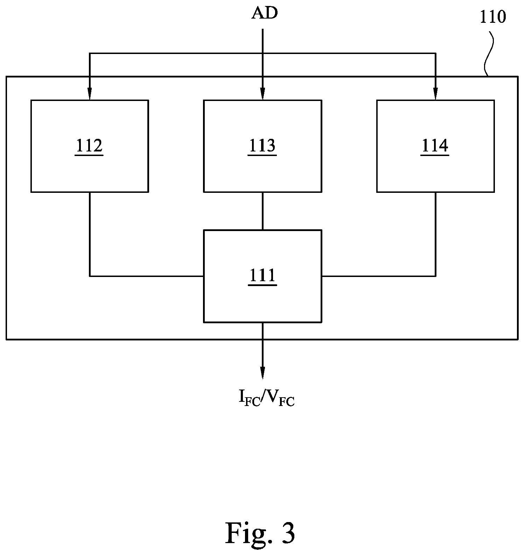

In some embodiments, the fuel cell 110 comprises a subsystem for controlling the aforementioned fuel condition. Please refer to Fig. 3. Fig. 3 is a functional block diagram of the fuel cell 110 in accordance with the embodiment of Fig. 2. In some embodiments, the fuel cell 110 comprises a fuel cell stack 111, a temperature control subsystem 112, an air regulation subsystem 113 and a hydrogen regulation subsystem 114. The temperature control subsystem 112, the air regulation subsystem 113 and the hydrogen regulation subsystem 114 are coupled to the fuel cell stack 111, and are configured to adjust the temperature condition, the air supply condition and the hydrogen supply condition of the fuel cell 110 when receiving an adjustment instruction AD from the control device 130, so that the fuel cell 110 can generate a corresponding cell voltage V_{FC} and cell current I_{FC}.

Please refer to Fig. 2 again. The electrochemical detection device 120 is coupled to the fuel cell 110, the control device 130 and the power converter 140, and is configured to perform an electrochemical analysis on the fuel cell 110. In some embodiments, the electrochemical detection device 120 comprises a detection device 121 and a processor 122.

The detection device 121 is coupled to the fuel cell 110, and is configured to detect the cell voltage V_{FC} and the cell current I_{FC} of the fuel cell 110. It should be noted that although the detection device 121 in Fig. 2 is illustrated as a single block, the detection device 121 is not limited to being implemented using a single device. In some embodiments, the detection device 121 can be implemented by combining two or more electronic devices with detecting functions (e.g., a voltage detector and an ammeter).

In some embodiments, the detection device 121 may detect the cell voltage V_{FC} and the cell current I_{FC} of the fuel cell 110 once every predetermined checking period (e.g., ten minutes), so as to achieve automatic adjustment (also referred to as active adjustment). In other embodiments, the detection device 121 may also detect the cell voltage V_{FC} and the cell current I_{FC} of the fuel cell 110 when receiving an adjustment instruction (e.g., from the processor 122).

The processor 122 is coupled to the detection device 121, and is configured to perform an electrochemical analysis based on the cell voltage V_{FC} and the cell current I_{FC} detected by the detection device 121, and determine the water content condition of the fuel cell 110 based on the result of the electrochemical analysis.

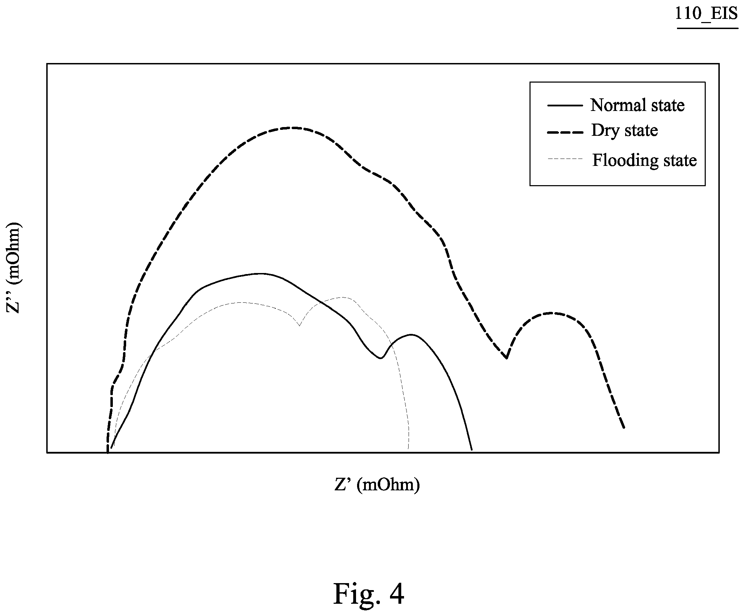

In some embodiments, the electrochemical analysis performed by the processor 122 is executed by generating and analyzing an electrochemical impedance spectroscopy (EIS). Please refer to Fig. 4. Fig. 4 is an EIS 110_EIS of the fuel cell 110 in accordance with some embodiments of the present disclosure, wherein the horizontal axis represents the real part Z' of the impedance of the fuel cell 110, and the vertical axis represents the imaginary part Z" of the impedance of the fuel cell 110.

First, the processor 122 calculates an ideal EIS (e.g., the curve labeled "Normal state" in Fig. 4) based on the loading condition set by the power converter 140, and calculates a measured EIS based on the cell voltage V_{FC} and the cell current I_{FC} detected by the detection device 121. It should be noted that those skilled in the art would be able to understand the method of generating the "EIS" mentioned in the present disclosure, and for the sake of brevity, it will not be repeated here.

In some embodiments, the processor 122 may determine the current water content condition of the fuel cell 110 by comparing a graph curve area of the ideal EIS with a graph curve area of the measured EIS. In the EIS 110_EIS, when the graph curve area corresponding to the current water content condition is larger than the graph curve area corresponding to the normal state, the processor 122 will determine that the water content condition of the fuel cell 110 is in the dry state; when the graph curve area corresponding to the current water content condition is smaller than the graph curve area corresponding to the normal state, the processor 122 will determine that the water content condition of the fuel cell 110 is in the flooding state.

In other embodiments, the processor 122 may determine the current water content condition of the fuel cell 110 by comparing the peak value of the ideal EIS with the peak value of the measured EIS. In the EIS 110_EIS, when the peak value corresponding to the current water content condition is greater than the peak value corresponding to the normal state, the processor 122 will determine that the water content condition of the fuel cell 110 is in the dry state; when the peak value corresponding to the current water content condition is lower than the peak value corresponding to the normal state, the processor 122 will determine that the water content condition of the fuel cell 110 is in the flooding state.

In yet other embodiments, the processor 122 may determine the current water content condition of the fuel cell 110 based on the graph curve of the measured EIS. In the EIS 110_EIS, when the graph curve corresponding to the current water content condition is a divergent curve, the processor 122 will determine that the water content condition of the fuel cell 110 is in the dry state; when the graph curve corresponding to the current water content condition is a convergence curve, the processor 122 will determine that the water content condition of the fuel cell 110 is in the flooding state.

In addition, the processor 122 may combine the aforementioned multiple determination methods to determine the current water content condition of the fuel cell 110. For example, the processor 122 may determine the water content condition of the fuel cell 110 based on both the graph curve area and the peak value in the EIS.

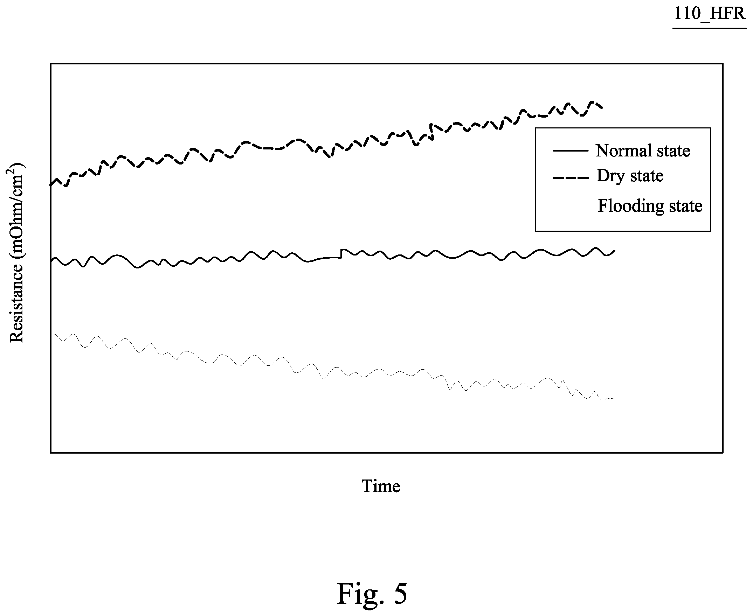

It should be noted that the electrochemical analysis mentioned in the present disclosure is not limited to generating EIS. In some embodiments, the electrochemical analysis performed by the processor 122 is executed by generating and analyzing a high frequency resistance (HFR) spectrum. Please refer to Fig. 5. Fig. 5 is a HFR spectrum 110_HFR of the fuel cell 110 in accordance with some embodiments of the present disclosure, wherein the vertical axis represents the resistance value of the fuel cell 110.

First, the processor 122 calculates an ideal HFR spectrum (e.g., the curve labeled "Normal state" in Fig. 5) based on the loading conditions set by the power converter 140, and calculates a measured HFR spectrum based on the cell voltage V_{FC} and cell current I_{FC} detected by the detection device 121. It should be noted that those skilled in the art would be able to understand the method of generating the "HFR spectrum" mentioned in the present disclosure, and for the sake of brevity, it will not be repeated here.

Next, the processor 122 may determine the current water content condition of the fuel cell 110 by comparing the ideal HFR spectrum with the measured HFR spectrum. In the HFR spectrum 110_HFR, when the resistance value of the curve corresponding to the current water content condition is greater than the resistance value of the curve corresponding to the normal state at the same time, the processor 122 will determine that the water content condition of the fuel cell 110 is in the dry state; when the resistance value of the curve corresponding to the current water content condition is lower than the resistance value of the curve corresponding to the normal state at the same time, the processor 122 will determine that the water content condition of the fuel cell 110 is in the flooding state.

Furthermore, in some embodiments, the processor 122 is further configured to determine whether the system loading of the fuel cell control system 100 is stable. When the system loading of the fuel cell control system 100 has not stabilized, the processor 122 will idle for a specified time period, and then confirm again whether the system loading of the fuel cell control system 100 is stable after the specified time period; when the system loading of the fuel cell control system 100 has stabilized, the processor 122 will perform the aforementioned electrochemical analysis.

Please refer to Fig. 2 again. After the processor 122 completes the determination of the water content condition of the fuel cell 110, it will transmit an analysis result ANA to the control device 130. The control device 130 is coupled to the fuel cell 110 and the electrochemical detection device 120, and is configured to transmit the adjustment instruction AD to the fuel cell 110 to adjust the fuel condition of the fuel cell 110 when the water content condition of the fuel cell 110 is in the dry state or the flooding state.

Specifically, when the water content condition of the fuel cell 110 is in the dry state, the control device 130 is configured to select at least one of the following operations to perform: (instructing the hydrogen regulation subsystem 114 for) increasing the hydrogen supply condition of the fuel cell 110; (instructing the hydrogen regulation subsystem 113 for) increasing the air supply condition of the fuel cell 110; and (instructing the temperature control subsystem 112 for) decreasing the temperature condition of the fuel cell 110. In some embodiments, the operations of increasing the air supply condition of the fuel cell 110 and decreasing the temperature condition of the fuel cell 110 have a higher priority than the operation of increasing the hydrogen supply condition of the fuel cell 110, so as to save the cost of adjustment.

On the other hand, when the water content condition of the fuel cell 110 is in the flooding state, the control device 130 is configured to select at least one of the following operations to perform: (instructing the hydrogen regulation subsystem 114 for) decreasing the hydrogen supply condition of the fuel cell 110; (instructing the hydrogen regulation subsystem 113 for) decreasing the air supply condition of the fuel cell 110; and (instructing the temperature control subsystem 112 for) increasing the temperature condition of the fuel cell 110. In some embodiments, the operations of decreasing the air supply condition of the fuel cell 110 and increasing the temperature condition of the fuel cell 110 have a higher priority than the operation of decreasing the hydrogen supply condition of the fuel cell 110, so as to save the cost of adjustment.

After the control device 130 adjusts the fuel condition of the fuel cell 110, the electrochemical detection device 120 will detect the cell voltage V_{FC} and the cell current I_{FC} of the fuel cell 110 again and repeats the above adjustment method until the water content condition of the fuel cell 110 returns to the normal state. With the above control method, the fuel cell control system 100 of the present disclosure can achieve the "closed loop" characteristic of the system.

The power converter 140 is coupled to the fuel cell 110 and the system loading 150, and is configured to determine the loading condition of the fuel cell 110 and apply the loading condition to the system loading 150. When the water content condition of the fuel cell 110 returns to the normal state, the power converter 140 is configured to generate a corresponding output power based on the current cell voltage V_{FC} and cell current I_{FC}. In some embodiments, the cell voltage V_{FC} and the cell current I_{FC} generated by the fuel cell 110 are related to the current loading condition.

In some embodiments, the power converter 140 can be implemented with a DC/DC converter, a DC/AC converter, other devices with conversion functions or any combination thereof.

In some embodiments, the electrochemical detection device 120 and the power converter 140 may be disposed on different substrates in the fuel cell control system 100 and connected to each other through a specific transmission method (e.g., a universal asynchronous receiver/transmitter (UART)), so as to transmit signals to each other. In some embodiments not shown, the electrochemical detection device 120 and the power converter 140 may also be integrated into a single electronic device, and the electrochemical detection device 120 is disposed at the front end of the electronic device.

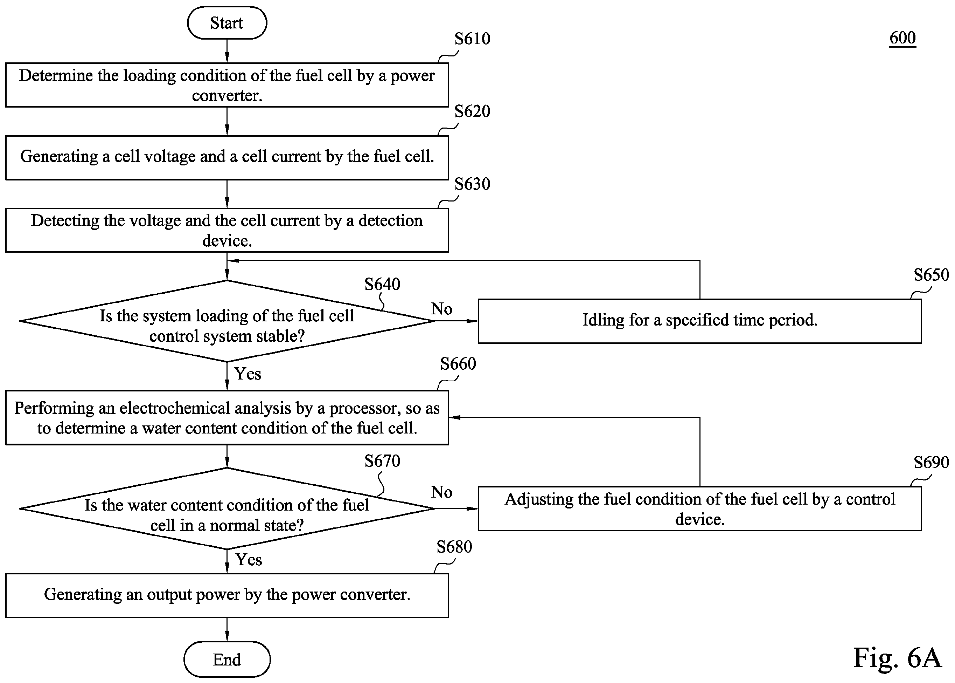

Fig. 6A is a flowchart of a fuel cell control method 600 in accordance with some embodiments of the present disclosure. The fuel cell control method 600 is suitable for a fuel cell control system (e.g., the fuel cell control system shown in Fig. 2). In some embodiments, the fuel cell control method 600 comprises steps S610, S620, S630, S640, S650, S660, S670, S680 and S690.

In step S610, a loading condition of a fuel cell (e.g., the fuel cell 110) is determined by a power converter (e.g., the power converter 140). Next, step S620 will be performed.

In step S620, a cell voltage and a cell current are generated by the fuel cell, based on the loading condition and a fuel condition of the fuel cell. Next, step S630 will be performed.

In step S630, the cell voltage and the cell current generated by the fuel cell are detected by a detection device (e.g., the detection device 121). Next, step S640 will be performed.

In step S640, a processor (e.g., processor 122) determines whether the system loading of the fuel cell control system has stabilized. When the system loading of the fuel cell control system has not yet stabilized, step S650 will be performed next; when the system loading of the fuel cell control system has stabilized, step S660 will be performed next.

In step S650, the processor idles for a specified time period and step S640 will be performed again after the idle is completed, so as to confirm whether the system loading of the fuel cell control system has stabilized again.

In step S660, since the processor determines that the system loading of the fuel cell control system has stabilized, an electrochemical analysis is performed by the processor based on the cell voltage and the cell current, so as to determine the water content condition of the fuel cell. Next, step S670 will be performed.

In step S670, the processor determines whether the water content condition of the fuel cell is in the normal state. When the water content condition is in the normal state, step S680 will be performed next; when the water content condition is not in the normal state (i.e., in the dry state or the flooding state), step S690 will be performed next.

In step S680, an output power is generated by the power converter based on the cell voltage and the cell current.

In step S690, the fuel condition of the fuel cell is adjusted by a control device (e.g., the control device 130), and step S660 will be performed again after the adjustment is completed, so as to determine the adjusted water content condition of the fuel cell again.

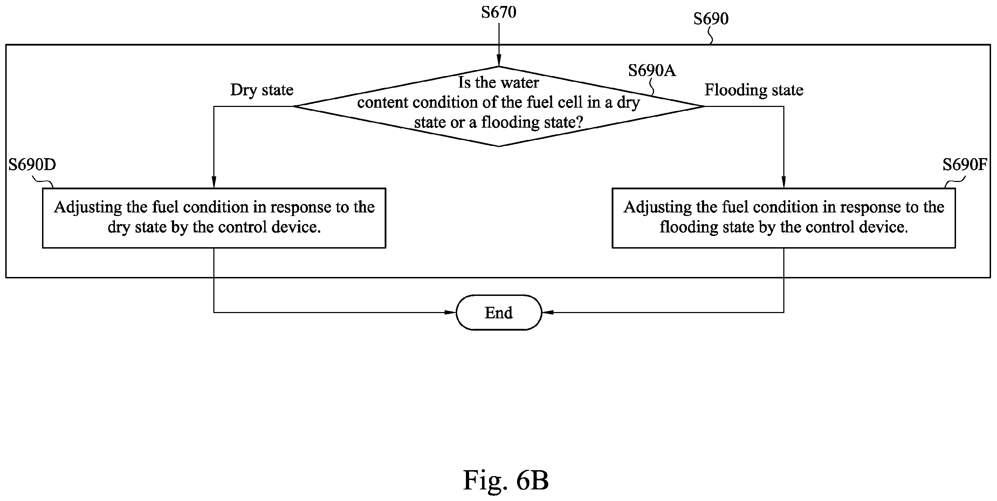

As mentioned above, in response to the water content condition of the fuel cell being in the dry state and the flooding state, the control circuit adjusts the fuel condition of the fuel cell in different ways. Therefore, in some embodiments, step S690 further comprises more steps. Please refer to Fig. 6B. Fig. 6B is a flowchart of the step S690 of the fuel cell control method 600 in accordance with some embodiments of the present disclosure. In some embodiments, step S690 comprises steps S690A, S690D and S690F.

Step S690A follows step S670. In step S690A, the processor determines whether the water content condition of the fuel cell is in the dry state or the flooding state. When the water content condition of the fuel cell is in the dry state, step S690D will be performed next; when the water content condition of the fuel cell is in the flooding state, step S690F will be performed next.

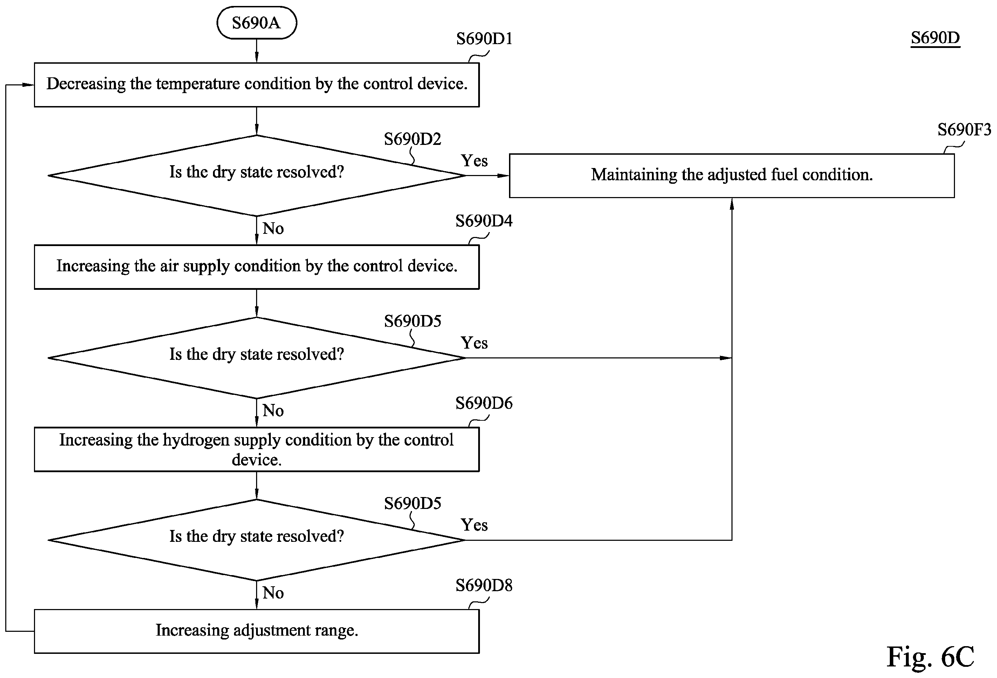

For the detailed process of step S690D, please refer to Fig. 6C. Fig. 6C is a flowchart of step S690D of the fuel cell control method 600 in accordance with some embodiments of the present disclosure. In step S690D, the fuel condition of the fuel cell is adjusted in response to the dry state by the control device. In some embodiments, step S690D comprises steps S690D1-S690D8.

In step S690D1, the temperature condition of the fuel cell is decreased by the control device, and step S690D2 will be performed next. In step S690D2, it is determined whether the dry state is resolved. When the dry state has been resolved, step S690D3 will be performed next; when the dry state has not been resolved, step S690D4 will be performed next.

In step S690D3, since the dry state has been resolved, the control device completes the adjustment of the fuel condition of the fuel cell and maintains the fuel cell at the current fuel condition (i.e., temperature condition, air supply condition and hydrogen supply condition).

In step S690D4, since the dry state cannot be resolved even after adjusting the temperature condition, the air supply condition of the fuel cell is increased by the control device, and step S690D5 will be performed next. In step S690D5, it is determined whether the dry state is resolved. When the dry state has been resolved, step S690D3 will be performed next; when the dry state has not been resolved, step S690D6 will be performed next.

In step S690D6, since the dry state cannot be resolved even after adjusting the air supply condition, the hydrogen supply condition of the fuel cell is increased by the control device, and step S690D7 will be performed next. In step S690D7, it is determined whether the dry state is resolved. When the dry state has been resolved, step S690D3 will be performed next; when the dry state has not been resolved, step S690D8 will be performed next.

In step S690D8, since the dry state cannot be resolved by adjusting the temperature condition, air supply condition and hydrogen supply condition with the current adjustment range, the control device will increase the adjustment range and perform step S690D1 again, so as to adjust the fuel condition of the fuel cell with the new adjustment range.

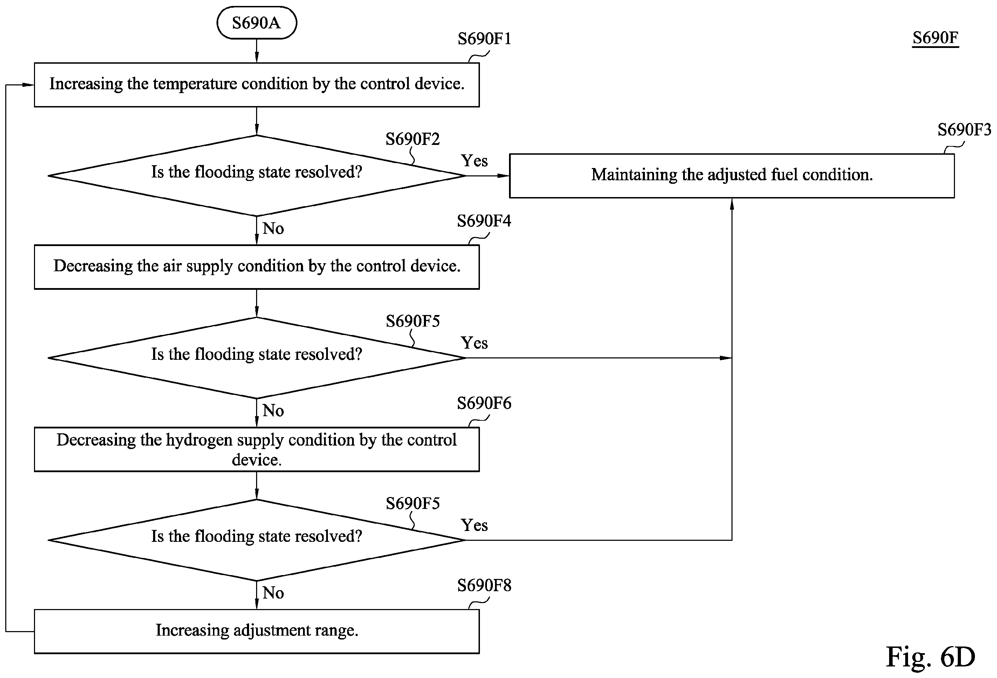

On the other hand, regarding the detailed process of step S690F, please refer to Fig. 6D. Fig. 6D is a flowchart of step S690F of the fuel cell control method 600 in accordance with some embodiments of the present disclosure. In step S690F, the fuel condition of the fuel cell is adjusted in response to the flooding state by the control device. In some embodiments, step S690F comprises steps S690F1-S690F8.

Steps S690F1-S690F8 in Fig. 6D are similar to steps S690D1-S690D8 in Fig. 6C. For the sake of brevity, the following paragraphs only focus on describing the differences between steps S690F1-S690F8 and steps S690D1-S690D8, and the similarities will not be repeated here.

Specifically, since steps S690F1-S690F8 are performed for adjusting the fuel condition of the fuel cell in response to the flooding state, the adjustments in steps S690F1, S690F4 and S690F6 will be opposite to that of steps S690D1, S690D4 and S690D6 (i.e., increasing the temperature condition, decreasing the air supply condition and decreasing the hydrogen supply condition), while steps S690F2, S690F5 and S690F7 are performed for determining whether the flooding state has been resolved.

It should be noted that the number and order of steps in the flowcharts of Fig. 6C and Fig. 6D are only examples, and are not intended to limit the present disclosure. Other numbers and orders of steps are within the scope of the present disclosure. In some embodiments, steps S690D1 and S690D4 may be interchanged, and steps S690F1 and S690F4 may be interchanged. In some embodiments, an additional step may be included between step S690D1 and step S690D2 (step S690F1 and step S690F2), between step S690D4 and step S690D5 (step S690F4 and step S690F5), and between step S690D6 and step S690D7 (step S690F6 and step S690F7), in which the fuel condition of the fuel cell is restored to the original value (i.e., the unadjusted value) by the control device, so that only one of the temperature condition, air supply condition and hydrogen supply condition is adjusted each time in steps S690D and S690F.

With the fuel cell control system 100, the electrochemical detection device 120 and the fuel cell control method 600 of the present disclosure, the water content condition of the fuel cell can be adjusted in real time, so as to improve the power and life of the fuel cell. Furthermore, since the fuel cell control system 100 of the present disclosure uses electrochemical analysis to analyze the water content condition of the fuel cell, rather than using a voltage detector to detect voltage and then infer the water content condition, the accuracy of the analysis of the water content condition of the fuel cell can be further improved.

The above are preferred embodiments of the present disclosure. It will be apparent to those skilled in the art that various modifications and variations can be made to the structure of the present disclosure without departing from the scope or spirit of the present disclosure. In view of the foregoing, it is intended that the present disclosure cover modifications and variations of this disclosure provided they fall within the scope of the following claims and their equivalents.

## Claims

1. A fuel cell control system, configured to be coupled to a fuel cell to provide power to a load, and comprising:
an electrochemical detection device, coupled to the fuel cell and comprising:
a detection device, configured to detect a cell voltage and a cell current of the fuel cell; and
a processor, coupled to the detection device, and configured to perform an electrochemical analysis based on the cell voltage and the cell current to determine a water content condition of the fuel cell;
a control device, coupled to the fuel cell and the electrochemical detection device, and configured to adjust a fuel condition of the fuel cell when the water content condition of the fuel cell is in a dry state or a flooding state; and
a power converter, configured to determine a loading condition of the fuel cell, and generate an output power based on the cell voltage and the cell current when the water content condition of the fuel cell is in a normal state, wherein the cell voltage and the cell current is related to the loading condition.

2. The fuel cell control system of claim 1, wherein the fuel condition of the fuel cell comprises a hydrogen supply condition, an air supply condition and a temperature condition,
when the water content condition of the fuel cell is in the dry state, the control device is configured to perform at least one of the following operations:
increasing the hydrogen supply condition;
increasing the air supply condition; and
decreasing the temperature condition; and
when the water content condition of the fuel cell is in the flooding state, the control device is configured to perform at least one of the following operations:
decreasing the hydrogen supply condition;
decreasing the air supply condition; and
increasing the temperature condition.

3. The fuel cell control system of claim 2, wherein the control device performs the operation of increasing the air supply condition and decreasing the temperature condition with a higher priority than the operation of increasing the hydrogen supply condition, and
the control device performs the operation of decreasing the air supply condition and increasing the temperature condition with a higher priority than the operation of decreasing the hydrogen supply condition.

4. The fuel cell control system of claim 1, wherein the processor is configured to perform the electrochemical analysis to generate a measured electrochemical impedance spectroscopy (EIS) of the fuel cell and an ideal EIS corresponding to the normal state,
wherein the water content condition is in the dry state when the ideal EIS and the measured EIS meet at least one of the following conditions:
a graph curve area of the measured EIS is larger than a graph curve area of the ideal EIS;
a peak value of the measured EIS is greater than a peak value of the ideal EIS; and
the measured EIS is a divergent curve; and
wherein the water content condition is in the flooding state when the ideal EIS and the measured EIS meet at least one of the following conditions:
the graph curve area of the measured EIS is smaller than the graph curve area of the ideal EIS;
the peak value of the measured EIS is lower than the peak value of the ideal EIS; and
the measured EIS is a convergence curve.

5. The fuel cell control system of claim 1, wherein the processor is configured to perform the electrochemical analysis to generate a measured high frequency resistance (HFR) spectrum of the fuel cell and an ideal HFR spectrum corresponding to the normal state,
wherein when a resistance value in the measured HFR spectrum is greater than a resistance value in the ideal HFR spectrum at the same time, the water content condition is in the dry state; and
wherein when the resistance value in the measured HFR spectrum is lower than the resistance value in the ideal HFR spectrum at the same time, the water content condition is in the flooding state.

6. The fuel cell control system of claim 1, wherein the processor of the electrochemical detection device is further configured to determine whether a system loading of the fuel cell control system is stable, and configured to perform the electrochemical analysis after the system loading has stabilized.

7. The fuel cell control system of claim 1, wherein the detection device is configured to detect the cell voltage and the cell current of the fuel cell every time a detection cycle passes; or
the detection device is configured to detect the cell voltage and the cell current of the fuel cell when receiving an adjustment instruction.

8. A control method of a fuel cell control system, comprising:
determining, by a power converter, a loading condition of a fuel cell;
generating, by the fuel cell, a cell voltage and a cell current, based on the loading condition and a fuel condition of the fuel cell;
detecting, by a detection device, the cell voltage and the cell current;
performing, by a processor, an electrochemical analysis based on the cell voltage and the cell current, so as to determine a water content condition of the fuel cell;
in response to the water content condition of the fuel cell being in a dry state or a flooding state, adjusting, by a control device, the fuel condition of the fuel cell; and
in response to the water content condition of the fuel cell being in a normal state, generating, by the power converter, an output power.

9. The control method of claim 8, wherein the fuel condition of the fuel cell comprises a hydrogen supply condition, an air supply condition and a temperature condition,
wherein in response to the water content condition of the fuel cell being in the dry state, adjusting, by the control device, the fuel condition of the fuel cell comprises at least one of the following steps:
increasing, by the control device, the hydrogen supply condition;
increasing, by the control device, the air supply condition; and
decreasing, by the control device, the temperature condition; and
in response to the water content condition of the fuel cell being in the flooding state, adjusting, by the control device, the fuel condition of the fuel cell comprises at least one of the following steps:
decreasing, by the control device, the hydrogen supply condition;
decreasing, by the control device, the air supply condition; and
increasing, by the control device, the temperature condition.

10. The control method of claim 9, wherein the priority of the step of increasing, by the control device, the air supply condition and the priority of the step of decreasing, by the control device, the temperature condition are higher than the priority of the step of increasing, by the control device, the hydrogen supply condition, and
the priority of the step of decreasing, by the control device, the air supply condition and the priority of the step of increasing, by the control device, the temperature condition are higher than the priority of the step of decreasing, by the control device, the hydrogen supply condition.

11. The control method of claim 8, wherein performing, by the processor, the electrochemical analysis based on the cell voltage and the cell current, so as to determine the water content condition of the fuel cell comprises:
generating, by the processor, a measured electrochemical impedance spectroscopy (EIS) of the fuel cell and an ideal EIS corresponding to the normal state;
determining, by the processor, that the water content condition is in the dry state, in response to the ideal EIS and the measured EIS meeting at least one of the following conditions:
a graph curve area of the measured EIS is larger than a graph curve area of the ideal EIS;
a peak value of the measured EIS is greater than a peak value of the ideal EIS; and
the measured EIS is a divergent curve; and
determining, by the processor, that the water content condition is in the flooding state, in response to the ideal EIS and the measured EIS meeting at least one of the following conditions:
the graph curve area of the measured EIS is smaller than the graph curve area of the ideal EIS;
the peak value of the measured EIS is lower than the peak value of the ideal EIS; and
the measured EIS is a convergence curve.

12. The control method of claim 8, wherein performing, by the processor, the electrochemical analysis based on the cell voltage and the cell current, so as to determine the water content condition of the fuel cell comprises
generating, by the processor, a measured high frequency resistance (HFR) spectrum of the fuel cell and an ideal HFR spectrum corresponding to the normal state;
determining, by the processor, that the water content condition is in the dry state, in response to a resistance value in the measured HFR spectrum being greater than a resistance value in the ideal HFR spectrum at the same time; and
determining, by the processor, that the water content condition is in the flooding state, in response to the resistance value in the measured HFR spectrum being lower than the resistance value in the ideal HFR spectrum at the same time.

13. The control method of claim 8, wherein performing, by the processor, the electrochemical analysis based on the cell voltage and the cell current comprises:
determining, by the processor, whether a system loading of the fuel cell control system is stable;
in response to the processor determining that the system loading has not stabilized, idling for a specified time period; and
in response to the processor determining that the system loading has stabilized, performing the electrochemical analysis.

14. The control method of claim 8, wherein the step of detecting, by the detection device, the cell voltage and the cell current is performed every time a detection cycle passes; or
the step of detecting, by the detection device, the cell voltage and the cell current is performed in response to the detection device receiving an adjustment instruction.

15. An electrochemical detection device, configured to be coupled to a fuel cell and comprising:
a detection device, configured to detect a cell voltage and a cell current generated based on a fuel condition by the fuel cell; and
a processor, coupled to the detection device, configured to perform an electrochemical analysis based on the cell voltage and the cell current, and configured to determine a water content condition of the fuel cell is in a normal state, a dry state or a flooding state based on the electrochemical analysis.

16. The electrochemical detection device of claim 15, wherein the fuel condition of the fuel cell comprises a hydrogen supply condition, an air supply condition and a temperature condition,
when the water content condition of the fuel cell is in the dry state, the processor is configured to perform at least one of the following operations:
instructing a control device to increase the hydrogen supply condition;
instructing the control device to increase the air supply condition; and
instructing the control device to decrease the temperature condition; and
when the water content condition of the fuel cell is in the flooding state, the processor is configured to perform at least one of the following operations:
instructing the control device to decrease the hydrogen supply condition;
instructing the control device to decrease the air supply condition; and
instructing the control device to increase the temperature condition.

17. The electrochemical detection device of claim 16, wherein the processor instructs the control device to increase the air supply condition and decrease the temperature condition with a higher priority than instructing the control device to increase the hydrogen supply condition, and
the processor instructs the control device to decrease the air supply condition and increase the temperature condition with a higher priority than instructing the control device to decrease the hydrogen supply condition.

18. The electrochemical detection device of claim 15, wherein the processor is configured to perform the electrochemical analysis to generate a measured electrochemical impedance spectroscopy (EIS) of the fuel cell and an ideal EIS corresponding to the normal state,
wherein the processor determines that the water content condition is in the dry state when the ideal EIS and the measured EIS meet at least one of the following conditions:
a graph curve area of the measured EIS is larger than a graph curve area of the ideal EIS;
a peak value of the measured EIS is greater than a peak value of the ideal EIS; and
the measured EIS is a divergent curve; and
wherein the processor determines that the water content condition is in the flooding state when the ideal EIS and the measured EIS meet at least one of the following conditions:
the graph curve area of the measured EIS is smaller than the graph curve area of the ideal EIS;
the peak value of the measured EIS is lower than the peak value of the ideal EIS; and
the measured EIS is a convergence curve.

19. The electrochemical detection device of claim 15, wherein the processor is configured to perform the electrochemical analysis to generate a measured high frequency resistance (HFR) spectrum of the fuel cell and an ideal HFR spectrum corresponding to the normal state,
wherein when a resistance value in the measured **HFR** spectrum is greater than a resistance value in the ideal **HFR** spectrum at the same time, the processor determines that the water content condition is in the dry state; and
wherein when the resistance value in the measured **HFR** spectrum is lower than the resistance value in the ideal **HFR** spectrum at the same time, the processor determines that the water content condition is in the flooding state.

20. The electrochemical detection device of claim 15, wherein the processor is further configured to determine whether a system loading of a fuel cell control system in which the fuel cell is located is stable, and configured to perform the electrochemical analysis after the system loading has stabilized.
